# EUROPEAN PATENT APPLICATION

(11) **EP 4 667 430 A1**
(43) Date of publication of application: **24.12.2025**
(21) Application number: 24756896.7
(22) Date of filing: 14.02.2024
(51) Int. Cl.: C03C 13/00, C03B 5/16, C03B 5/027

(54) **COMPOSITION FOR GLASS FIBER, GLASS FIBER, AND METHOD FOR MANUFACTURING GLASS FIBER**

(30) Priority: 15.02.2023 JP 2023021576
(71) Applicant: Nippon Electric Glass Co., Ltd., Otsu-shi, Shiga 520-8639 (JP)
(72) Inventor: KIMURA, Miki, Otsu-shi Shiga 520-8639 (JP); KATO, Tsutomu, Otsu-shi Shiga 520-8639 (JP); HAYASHI, Masahiro, Otsu-shi Shiga 520-8639 (JP)
(74) Representative: Tetzner, Michael
(86) International application number: PCT/JP2024/004948
(87) International publication number: WO 2024/172055

(57) **Abstract**

Provided is a glass composition that can suppress the formation of a foam layer on a surface of a glass melt to improve radiative heat transfer from an upper burner, to thereby improve melting efficiency, and is easily formed into a uniform fiber shape. A composition for a glass fiber includes SiO₂ as a main component, includes, in terms of mass%, 0% to less than 10% of B₂O₃, 20% to 30% of MgO+CaO, and 600 ppm or less of SO₃, and has a ratio "Fe²⁺/total Fe" in glass of 40% or more.

## Description

### Technical Field

The present invention relates to a composition for a glass fiber for producing a glass fiber suitable as a reinforcing material for a resin, and a glass fiber including the composition for a glass fiber and a method of producing the glass fiber.

### Background Art

A glass fiber called an E glass is a glass long fiber to be used as part of a printed wiring board or a structural member of a vehicle, such as an automobile or an airplane. The glass long fiber is produced by continuous forming (spinning) with a forming apparatus called a bushing. A bushing apparatus is an apparatus having a substantially rectangular appearance including many nozzle portions (or orifice portions), and molten glass continuously flows out from a tip portion of each of the bushing nozzles to be quenched, and thus becomes a glass fiber.

In recent years, a reduction in energy consumption at the time of glass production has been required from the viewpoint of environmental protection. The production of glass requires a particularly large amount of energy, and hence an improvement in solubility of a raw material batch and an improvement in production efficiency are urgent. In order to improve the production efficiency, it is important to supply heat from an upper burner in a melting furnace to a batch or a glass melt without any waste. When the batch dissolves, a foam layer may be formed on a surface of the glass melt by a CO₂ or SO₂ gas emitted from the batch (so-called reboil bubbles). While the foam layer plays a role in suppressing heat radiation from the glass melt, heat from an upper portion of the glass melt is liable to be blocked, and as a result, energy efficiency at the time of glass production is liable to be reduced. It is particularly important to control the foam layer in the production of the E glass. The formation of the foam layer on the glass melt is easily affected by the redox state of the glass. In Patent Literature 1, there is a description that satisfactory operation of a glass production facility and the quality of a glass fiber to be obtained are ensured by adding two kinds of oxidizing agents, such as manganese, chromium, and cerium, each having an oxidation number of an element or 2 or more, in addition to an inorganic nitrate, to perform melting at a ratio of an amount of FeO with respect to a total amount of Fe of 0.4 or less, that is, under an oxidizing condition.

### Citation List

Patent Literature 1: JP 3382248 B2

### Summary of Invention

### Technical Problem

Such melting under an oxidizing condition as described in Patent Literature 1 has a problem in that an oxidizing agent is required and hence leads to an increase in raw material cost. When a glass fiber is used as a reinforcing material for a resin, it is important to make the shape of the glass fiber uniform in order to keep the blending amount of the glass fiber in the resin constant or to make the mechanical strength of a composite material uniform. The shape of the glass fiber is influenced by the rate of heat radiation from a glass melt at the time of spinning. When heat is easily radiated from the glass melt, the glass melt easily solidifies from a molten state, and its shape is easily determined. Accordingly, a uniform fiber diameter can be obtained. In general, Fe²⁺ has a thermal conductivity higher than that of Fe³⁺, and hence, when the ratio of the amount of FeO to the total amount of Fe is small, the heat radiation from molten glass becomes insufficient. Accordingly, it becomes difficult to make the fiber shape uniform.

In view of the above-mentioned circumstances, an object of the present invention is to provide a glass composition that can suppress the formation of a foam layer on a surface of a glass melt to improve radiative heat transfer from an upper burner, to thereby improve melting efficiency, and is easily formed into a uniform fiber shape.

### Solution to Problem

[1] According to one aspect of the present invention, there is provided a composition for a glass fiber, comprising SiO₂ as a main component, comprising, in terms of mass%, 0% to less than 10% of B₂O₃, 20% to 30% of MgO+CaO, and 600 ppm or less of SO₃, and having a ratio "Fe²⁺/total Fe" in glass of 40% or more. When the ratio "Fe²⁺/total Fe" in glass is set to be as large as 40% or more as described above, heat radiation from a glass melt is promoted at the time of spinning, and hence the glass melt easily solidifies and its shape is easily determined. Accordingly, a glass fiber having a uniform fiber diameter is easily obtained. In addition, when the ratio "Fe²⁺/total Fe" in glass is as high as 40% or more, the thermal conductivity of glass raw materials or glass is increased, and hence heat from a burner or an electrode in a melting furnace is easily absorbed. Accordingly, melting efficiency can be improved. When the ratio "Fe²⁺/total Fe" is high, that is, when the glass shifts to a reduction side, a SO₂ gas is liable to be generated, and hence a foam layer is liable to be formed on the glass melt. However, in the composition of the present invention, the content of SO₃ is reduced as much as possible to 600 ppm or less. Accordingly, even when the ratio "Fe²⁺/total Fe" is high, the SO₂ gas is less liable to be generated, and hence the foam layer is less liable to be formed on the glass melt. As a result, heat from an upper burner is less liable to be blocked, and hence energy efficiency can be improved.
   The phrase "comprising SiO₂ as a main component" means that the content of SiO₂ is largest of the components in the composition. In addition, the expression "x+y+···" as used herein means the content of the respective components.
[2] In the above-mentioned item [1], it is preferred that the composition for a glass fiber according to the one aspect of the present invention comprise, in terms of mass%, 50% to 65% of SiO₂, 10% to 20% of Al₂O₃, 0% to less than 10% of B₂O₃, 20% to 30% of MgO+CaO, 0.5% or less of SrO+BaO, 1 ppm to 200 ppm of SO₃, 0.8% or less of F, and less than 0.1% of P₂O₅, and have a ratio "Fe²⁺/total Fe" in glass of 40% or more.
[3] In the above-mentioned item [1] or [2], it is preferred that the composition for a glass fiber according to the one aspect of the present invention comprise, in terms of mass%, 1% or less of TiO₂, 2% or less of Li₂O+Na₂O+K₂O, and 0 ppm to 30 ppm of MoO₃.
[4] According to one aspect of the present invention, there is provided a glass fiber, comprising the composition for a glass fiber of any one of the above-mentioned items [1] to [3].
[5] According to one aspect of the present invention, there is provided a method of producing the glass fiber of the above-mentioned item [4], comprising: heating and melting glass raw materials blended so as to have a predetermined composition in a melting furnace to provide a molten glass; and ejecting the molten glass from a plurality of bushing nozzles to form the molten glass into a fiber form.
[6] In the above-mentioned item [5], the method of producing the glass fiber according to the one aspect of the present invention may comprise heating the glass raw materials and/or the molten glass with an electrode arranged in the melting furnace.
[7] In the above-mentioned item [5] or [6], the method of producing the glass fiber according to the one aspect of the present invention may comprise heating the glass raw materials and/or the molten glass with a burner arranged in the melting furnace.

### Advantageous Effects of Invention

According to the present invention, it is possible to provide the glass composition that can suppress the formation of a foam layer on a surface of the glass melt to improve radiative heat transfer from an upper burner, to thereby improve melting efficiency, and is easily formed into a uniform fiber shape.

### Description of Embodiments

A composition for a glass fiber (hereinafter also referred to simply as "glass composition") of the present invention comprises SiO₂ as a main component, comprises, in terms of mass%, 0% to less than 10% of B₂O₃, 20% to 30% of MgO+CaO, and 600 ppm or less of SO₃, and has a ratio "Fe²⁺/total Fe" in glass of 40% or more. The reasons why the glass composition has been limited as described above are described in detail below. In the present invention, the expression "%" refers to "mass%" unless otherwise specified.

SiO₂ is a component that forms a skeleton of a network structure in glass, and is a component that improves the mechanical strength of the glass. The glass composition of the present invention comprises SiO₂ as a main component. When the content of SiO₂ is too small, when a glass fiber comprising the glass composition of the present invention is mixed with a resin to form a composite material, it becomes difficult to obtain desired mechanical strength. Meanwhile, when the content of SiO₂ is too large, the solubility of raw materials is reduced, and it becomes difficult to obtain homogeneous glass. In addition, a spinning temperature is liable to be increased, resulting in a reduction in productivity. Accordingly, a suitable lower limit range of the content of SiO₂ is 50% or more, 51% or more, 52% or more, or 53% or more, most preferably 54% or more. A suitable upper limit range thereof is 65% or less, 63% or less, 60% or less, 59% or less, or 58% or less, most preferably 57% or less.

As with SiO₂, B₂O₃ is a component that forms the skeleton of the glass, and is also a component that reduces the viscosity of the glass. A suitable lower limit range of the content of B₂O₃ is 0% or more, 0.01% or more, 0.1% or more, 1% or more, 2% or more, 3% or more, 3.1% or more, 4% or more, or 4.5% or more, most preferably 4.7% or more. Meanwhile, when the content of B₂O₃ is too large, the glass is liable to undergo phase separation, and the chemical resistance of the glass is liable to be reduced. Accordingly, a suitable upper limit range of the content of B₂O₃ is less than 10%, 9% or less, 8% or less, or 7% or less, most preferably less than 7%.

MgO is a component that reduces the viscosity of the glass. A suitable lower limit range of the content of MgO is 0% or more, 0.5% or more, 0.8% or more, or 1% or more, most preferably 1.5% or more. Meanwhile, when the content of MgO is too large, a crystal such as diopside is liable to precipitate, and causes breaking of a thread at the time of the spinning of the glass fiber. Accordingly, a suitable upper limit range is 15% or less, 13% or less, 10% or less, 9% or less, 8% or less, 7% or less, 6% or less, 5% or less, 4% or less, 3% or less, 2.8% or less, or 2.7% or less, particularly 2.5% or less.

As with MgO, CaO is a component that reduces the viscosity of the glass. A suitable lower limit range of the content of CaO is 15% or more, 16% or more, 18% or more, 20% or more, or 21% or more, most preferably 22% or more. Meanwhile, when the content of CaO is too large, a crystal, such as anorthite or wollastonite, is liable to precipitate, and causes breaking of a thread at the time of the spinning of the glass fiber. Accordingly, a suitable upper limit range is 30% or less, 29% or less, or 28% or less, most preferably 26% or less.

From the viewpoint of suppressing the precipitation of an undesired crystal while reducing the viscosity of the glass, it is preferred to appropriately adjust the total content of MgO and CaO. As described above, the contents of MgO and CaO are liable to affect the precipitation of a crystal, such as diopside, anorthite, or wollastonite. A eutectic point can be obtained by mixing and incorporating both the components, and hence a liquidus temperature can be reduced. A suitable lower limit range of the content of MgO+CaO is 20% or more, 21% or more, 22% or more, or 23% or more, particularly 24% or more. Meanwhile, when the content of MgO+CaO is too large, the liquidus temperature is increased, and a crystal is liable to precipitate. Accordingly, a suitable upper limit range is 30% or less, 29% or less, 28% or less, or 27% or less, most preferably 26% or less.

SO₃ is a component that emits a SO₂ gas in a glass melt at 1,400°C or more to provide a fining effect. When the content thereof is too large, an excessive amount of the SO₂ gas is emitted from the glass melt, and hence reboil occurs at, for example, an interface with a refractory or platinum serving as a material for a melting facility. As a result, a foam layer is formed on the glass melt to make it difficult to transfer radiative heat from an upper burner to the glass melt, and hence a reduction in meltability may be caused. In addition, bubbles may be mixed in the glass, and hence breaking of a thread of the glass fiber may be caused at the time of spinning. Accordingly, the content of SO₃ is preferably 600 ppm or less, 400 ppm or less, 350 ppm or less, 300 ppm or less, 250 ppm or less, 230 ppm or less, 200 ppm or less, 130 ppm or less, 120 ppm or less, 100 ppm or less, 90 ppm or less, 70 ppm or less, 60 ppm or less, 50 ppm or less, or 40 ppm or less, particularly preferably 30 ppm or less. A lower limit of the content of SO₃ is not particularly limited, and is 0 ppm or more, but in order to obtain a desired fining effect, the content is preferably 1 ppm or more or 5 ppm or more, particularly preferably 7 ppm or more.

The value of the ratio "Fe²⁺/total Fe" is obtained by dividing the content of divalent iron by the total iron content, and serves as an indicator of redox. A large value of the ratio "Fe²⁺/total Fe" means that the glass has shifted to a reduced state, and a small value thereof means that the glass has shifted to an oxidized state. Fe²⁺ has absorption in an infrared region, and hence heat from a burner or an electrode in a melting furnace is easily absorbed by the glass. As a result, meltability is improved. Accordingly, melting can be performed with low energy. Further, heat is easily radiated from Fe²⁺, and hence there is an advantage in that the glass melt is easily cooled in the spinning process, and the fiber shape is easily determined. Accordingly, a suitable lower limit of the value of the ratio "Fe²⁺/total Fe" is 40% or more, 41% or more, 42% or more, 43% or more, 44% or more, 45% or more, 46% or more, 47% or more, 48% or more, 49% or more, 50% or more, 51% or more, 52% or more, 53% or more, 54% or more, 55% or more, 56% or more, 57% or more, 58% or more, or 59% or more, particularly 60% or more. Meanwhile, an upper limit of the value of the ratio "Fe²⁺/total Fe" is not particularly limited, and may be 100%. However, when the value is too large, a polyvalent oxide component in the glass may be easily reduced, and may be precipitate as metallic stones to cause the breaking of a thread of the glass fiber at the time of spinning. Accordingly, a suitable upper limit is 99% or less, 95% or less, 90% or less, 88% or less, 87% or less, 86% or less, 85% or less, 84% or less, 83% or less, 82% or less, or 81% or less, particularly 80% or less.

The redox may be adjusted by the addition of an oxidizing agent. The oxidizing agent means, for example, SO₃ or NO₃. SO₃ also serves as a fining agent, and hence the amount described above is preferred. NO₃ may be added in the form of a nitrate. In this case, 0 ppm or more, 100 ppm or more, 300 ppm or more, 500 ppm or more, 1,000 ppm or more, 1,500 ppm or more, or 2,000 ppm or more of the nitrate in terms of NO₃ is preferably added into a raw material batch, and the addition amount is preferably 8,000 ppm or less, 7,000 ppm or less, or 6,000 ppm or less. When the content of NO₃ is too large, the ratio "Fe²⁺/total Fe" becomes too low, and hence a fiber diameter may be hardly stabilized.

An Fe component is a component that may be mixed in the glass as an impurity of the raw material. When the content of the Fe component is too large, a dielectric constant and a dielectric loss tangent may be increased. In addition, since the glass may become colored due to absorption in the visible region, the color tone of a composite material may change when the glass is mixed in the resin. Accordingly, a suitable upper limit range is 1% or less, 0.5% or less, or 0.45% or less, particularly 0.4% or less in terms of Fe₂O₃. Meanwhile, the use of a high-purity raw material leads to an increase in raw material cost, and hence the content of the Fe component may be more than 0%, 0.05% or more, 0.08% or more, 0.1% or more, or 0.13% or more, particularly 0.15% or more in terms of Fe₂O₃.

The composition for a glass fiber of the present invention may comprise the following components in addition to the above-mentioned components.

Al₂O₃ is a component that forms the skeleton of the glass, and suppresses phase separation of the glass to stabilize vitrification. In addition, Al₂O₃ is a component that improves the strength or chemical resistance of the glass. A suitable lower limit range of the content of Al₂O₃ is 10% or more or 11% or more, most preferably 12% or more. Meanwhile, when the content of Al₂O₃ is too large, the solubility of raw materials is reduced, and it becomes difficult to obtain homogeneous glass. Accordingly, a suitable upper limit range is 20% or less, 19% or less, or 18% or less, most preferably 17% or less.

As with MgO and CaO, SrO is a component that reduces the viscosity of the glass. A suitable lower limit range of the content of SrO is 0% or more, 0.001% or more, or 0.003% or more, particularly 0.005% or more. Meanwhile, SrO has a smaller reducing effect on the viscosity of the glass and higher raw material cost than those of MgO and CaO. Accordingly, a suitable upper limit range is 1% or less, 0.9% or less, 0.8% or less, 0.5% or less, 0.4% or less, 0.3% or less, 0.2% or less, or 0.1% or less, particularly less than 0.1%.

As with MgO and CaO, BaO is a component that reduces the viscosity of the glass, but has a smaller reducing effect on the viscosity of the glass and higher raw material cost than those of MgO and CaO. Accordingly, a suitable upper limit range is 1% or less, 0.9% or less, 0.8% or less, 0.5% or less, 0.4% or less, 0.3% or less, or 0.2% or less, particularly 0.15% or less. A lower limit range of the content of BaO is 0% or more, but in order to obtain the above-mentioned effect, may be set to 0.001% or more or 0.003% or more, particularly 0.005% or more.

A suitable upper limit range of the content of SrO+BaO is 0.5% or less, 0.4% or less, 0.3% or less, or 0.2% or less, particularly 0.15% or less because of the above-mentioned reasons. In addition, a suitable lower limit range of the content of SrO+BaO is 0% or more, 0.001% or more, or 0.003% or more, particularly 0.005% or more.

F is a component that has a fining action. In addition, F has a reducing effect on the viscosity of the glass melt. However, when the content thereof is large, an environmental load may be increased, or a melting facility may be corroded. Accordingly, a suitable upper limit range is 0.8% or less, 0.5% or less, 0.3% or less, or 0.2% or less, particularly 0.1% or less. Meanwhile, a lower limit range of the content of F is not particularly limited, and is 0% or more, but in order to obtain the above-mentioned effects, is preferably 0.01% or more or 0.02% or more, particularly preferably 0.05% or more.

P₂O₅ is a component that is liable to promote phase separation of the glass and reduce the water resistance. In addition, P₂O₅ is a component that has low global reserves, and hence has a risk of supply instability. Accordingly, when the content of P₂O₅ is reduced, the supply risk of the raw material is reduced, and hence the maintenance of production efficiency and the stable supply of a product can be achieved. In view of the foregoing, a suitable upper limit range of the content of P₂O₅ is less than 0.1%, 0.09% or less, or 0.08% or less, particularly 0.07% or less.

TiO₂ is a component that reduces the viscosity of the glass and improves the water resistance. However, when the content thereof is too large, the viscosity at high temperature of the glass is liable to be increased, and the dissolution rate of the raw material is liable to be reduced. Accordingly, a suitable upper limit range is 1% or less, 0.9% or less, 0.8% or less, 0.7% or less, 0.6% or less, 0.5% or less, 0.49% or less, 0.48% or less, 0.47% or less, 0.46% or less, 0.45% or less, 0.44% or less, 0.43% or less, 0.42% or less, or 0.41% or less, particularly 0.4% or less. Meanwhile, a suitable lower limit range is not particularly limited, and is 0% or more. However, TiO₂ is a component that may be mixed in as an impurity of the raw material, and the use of a high-purity raw material leads to an increase in raw material cost, and hence the suitable lower limit range may be set to more than 0%, 0.1% or more, or 0.15% or more.

Li₂O is a component that reduces the viscosity of the glass. However, when the glass composition of the present invention is used as a reinforcing material for a printed wiring board, the electrical resistivity of the glass may be reduced, and hence it is preferred that the glass composition be substantially free of Li₂O. In addition, the usage amount needs to be minimized from the viewpoints of an increase in raw material cost and stable production because there is a risk of supply instability of the raw material. Accordingly, a suitable upper limit range of the content of Li₂O is 1% or less, 0.9% or less, 0.8% or less, 0.7% or less, 0.6% or less, 0.5% or less, 0.4% or less, 0.3% or less, 0.2% or less, or 0.1% or less, and the composition is more suitably substantially free of Li₂O (specifically, less than 0.1%). Meanwhile, Li₂O is a component that may be mixed in as an impurity of the raw material. For example, E glass may be produced by recycling and melting various glasses, and hence Li₂O may be mixed therein from cullet. Accordingly, Li₂O may be incorporated to the extent that the characteristics of a product such as electrical resistivity are not significantly reduced. Accordingly, a suitable lower limit range of the content of Li₂O is 0% or more, 0.001% or more, or 0.005% or more, particularly 0.01% or more.

As with Li₂O, Na₂O is a component that reduces the viscosity of the glass, but may reduce the electrical resistivity of the glass, and hence the content thereof is preferably reduced as much as possible. Accordingly, a suitable upper limit range is less than 1%, 0.95% or less, or 0.9% or less. Meanwhile, Na₂O is often mixed in the raw material as an impurity, and hence the use of a high-purity raw material leads to an increase in raw material cost. Accordingly, a lower limit range may be set to 0% or more, 0.1% or more, or 0.2% or more, particularly 0.3% or more.

As with Li₂O and Na₂O, K₂O is a component that reduces the viscosity of the glass, but may reduce the electrical resistivity of the glass, and hence the content thereof is preferably reduced as much as possible. Accordingly, a suitable upper limit range is less than 1%, 0.9% or less, 0.8% or less, 0.7% or less, 0.6% or less, 0.5% or less, or 0.4% or less, most preferably 0.3% or less. Meanwhile, K₂O is often mixed in the raw material as an impurity, and hence the use of a high-purity raw material leads to an increase in raw material cost. Accordingly, a lower limit range may be set to 0% or more or 0.01% or more, particularly 0.03% or more.

The total content of Li₂O+Na₂O+K₂O is preferably 2% or less, 1.9% or less, 1.8% or less, or 1.5% or less for suppressing a reduction in electrical resistivity of the glass. However, in consideration of mixing in as an impurity from the raw materials or the cullet, the lower limit range may be set to 0% or more, 0.01% or more, or 0.03% or more, particularly 0.05% or more.

As described above, an alkali metal component or an alkaline earth metal component is effective in order to reduce the viscosity of the glass melt, but cannot be incorporated in a large amount because the electrical resistivity of the glass is liable to be reduced and a crystal, such as diopside or wollastonite, is liable to precipitate. Accordingly, in order to adjust the viscosity of the glass melt, it is effective to adjust a ratio between the total content of the components that easily reduce the viscosity, such as the alkali metal component (R₂O), the alkaline earth metal component (R'O), and B₂O₃, and the total content of components that form a glass skeleton, such as SiO₂ and Al₂O₃. That is, a value of the ratio "(Li₂O+Na₂O+K₂O+MgO+CaO+SrO+BaO+B₂O₃)/(SiO₂+Al₂O₃)" is preferably set within a suitable range. When the value is too large, while the viscosity is easily reduced, the electrical resistivity of the glass is liable to be reduced, or a crystal is liable to precipitate to cause the breaking of a thread of the glass fiber. Accordingly, a suitable upper limit range of the above-mentioned value is 0.5 or less, 0.49 or less, or 0.48 or less, particularly 0.47 or less. Meanwhile, when the above-mentioned value is too small, the viscosity is liable to be increased, with the result that production with low energy becomes difficult. Accordingly, a suitable lower limit range is 0.34 or more, 0.35 or more, 0.36 or more, 0.37 or more, 0.38 or more, or 0.39 or more, particularly 0.4 or more.

ZrO₂ is a component that improves the chemical durability of the glass. However, when the content of ZrO₂ is too large, a liquidus temperature may be increased, and devitrification may occur at the time of spinning to result in a reduction in production efficiency. Accordingly, a suitable upper limit range is 0.05% or less, 0.04% or less, or 0.03% or less. ZrO₂ is a component that may be mixed in the glass as an impurity of the raw material or by elusion from a refractory of a melting facility. When a refractory thermally sprayed with Pt or the like is used, the mixing can be suppressed, but the use leads to an increase in production cost. Accordingly, a lower limit range of the content of ZrO₂ is 0% or more, but in view of the foregoing, may be set to 0.01% or more.

MoO₃ is a component that easily reduces the Fe component in the glass. Accordingly, a suitable lower limit range is 0.1 ppm or more, 0.5 ppm or more, 1 ppm or more, 1.5 ppm or more, 2 ppm or more, 5 ppm or more, or 6 ppm or more. Meanwhile, when the content of MoO₃ is too large, MoO₃ may precipitate as Mo stones in the glass melt to cause the breaking of a thread of the glass fiber at the time of spinning. Particularly when the glass shifts to a reduction side, the tendency becomes significant. Accordingly, a suitable upper limit range is 65 ppm or less, 63 ppm or less, 61 ppm or less, 50 ppm or less, 45 ppm or less, 40 ppm or less, 35 ppm or less, or 30 ppm or less.

Cr₂O₃ is a component that may be mixed in from a refractory of a dissolution tank. When a refractory thermally sprayed with Pt or the like is used, the mixing can be suppressed, but the use leads to an increase in production cost. Accordingly, a suitable lower limit range of the content of Cr₂O₃ is 0% or more, 0.001% or more, 0.002% or more, or 0.003% or more. Meanwhile, when the content of Cr₂O₃ is increased, as with MoO₃, Cr₂O₃ may precipitate as metallic stones to cause the breaking of a thread of the glass fiber at the time of spinning. Particularly when the glass shifts to a reduction side, the tendency becomes significant. Accordingly, an upper limit range is 0.02% or less, 0.015% or less, or 0.013% or less, particularly 0.011% or less.

Pt and Rh are components that may be mixed in from a bushing facility. When the contents of Pt and Rh are increased, Pt and Rh may precipitate as metallic stones to cause the breaking of a thread of the glass fiber at the time of spinning. Accordingly, a suitable upper limit of the content of each of Pt and Rh is 1 ppm or less, 0.7 ppm or less, 0.5 ppm or less, or 0.3 ppm or less, particularly 0.1 ppm or less.

Incidentally, when the contents of alkali metal elements, such as Li₂O, Na₂O, and K₂O, are small, a melting temperature is liable to be increased. SO₃ is decomposed at 1,400°C or more to emit a SO₂ gas. When the gas is emitted under a state in which the viscosity of the glass melt is high, sufficient bubble breaking cannot be expected. In such case, SnO₂ may be used as a fining agent. SnO₂ emits an oxygen gas at a high temperature of 1,500°C or more through a change in valence of Sn in accordance with the temperature of the glass melt. Accordingly, SnO₂ may be added in a range of 0.3% or less in order to obtain a sufficient fining effect.

In addition to SO₃ and SnO₂, for example, Cl, Sb₂O₃, As₂O₃, or CeO₂ may be used as the fining agent or for reducing the viscosity of the glass melt. However, there are concerns about an environmental load, corrosion of a production facility, or the like, and hence the content of each of the components is preferably 0.5% or less, 0.3% or less, 0.2% or less, or 0.1% or less, particularly preferably less than 0.1%.

It is preferred that the glass fiber of the present invention comprise, in terms of mass%, 50% to 65% of SiO₂, 10% to 20% of Al₂O₃, 0% to less than 10% of B₂O₃, 20% to 30% of MgO+CaO, 0.5% or less of SrO+BaO, 1 ppm to 200 ppm of SO₃, 0.8% or less of F, and less than 0.1% of P₂O₅, and have a ratio "Fe²⁺/total Fe" in glass of 40% or more. With this configuration, the generation of a foam layer on the surface of the glass melt can be suppressed, and hence the melting efficiency can be improved because heat from a combustion atmosphere or the electrode is easily absorbed.

Next, the characteristics of the glass composition of the present invention are described.

When the spinning temperature of the glass composition is high, damage to a bushing is increased, and the lifetime of the bushing is shortened. As a result, a bushing exchange frequency and energy cost are increased, resulting in an increase in production cost. Accordingly, the spinning temperature of the glass fiber of the present invention is preferably 1,300°C or less, 1,280°C or less, 1,250°C or less, or 1,240°C or less, particularly preferably 1,220°C or less. The term "spinning temperature" refers to a temperature at which the viscosity of the glass composition becomes 10³ dPa·s.

When a liquidus temperature T_{L} is high, stable production becomes difficult. Accordingly, the liquidus temperature is preferably 1,200°C or less, 1,190°C or less, 1,180°C or less, 1,150°C or less, particularly preferably 1,100°C or less.

In addition, as a difference between the liquidus temperature and the spinning temperature is increased more, a crystal is less liable to precipitate at the time of spinning, and the breaking of a thread of the glass fiber is less liable to occur, with the result that the productivity is improved more. Accordingly, the difference between the liquidus temperature and the spinning temperature (ΔT=temperature at viscosity of 10³ dPa·s-TL) is preferably 50°C or more, 60°C or more, 70°C or more, 80°C or more, 90°C or more, or 100°C or more, particularly preferably 105°C or more.

When the glass fiber comprising the glass composition of the present invention is used as a reinforcing material for, for example, a printed wiring board, the dielectric constant and the dielectric loss tangent are required to be small, and hence a dielectric loss can be reduced. Accordingly, the glass composition of the present invention has a dielectric constant at 25°C and 1 MHz of preferably 8 or less, particularly preferably 7.5 or less. In addition, the glass composition of the present invention has a dielectric loss tangent at 25°C and 1 MHz of preferably less than 0.003, particularly preferably 0.002 or less.

A Young's modulus is a characteristic that affects the mechanical strength of a composite material of the glass fiber and the resin. When the Young's modulus is too small, it is difficult to obtain a composite material having sufficient mechanical strength. Accordingly, a suitable lower limit range of the Young's modulus of the glass composition is 80 GPa or more, 83 GPa or more, or 85 GPa or more, particularly 86 GPa or more. An upper limit of the Young's modulus is not particularly limited, but is realistically 200 GPa or less.

The composition for a glass fiber of the present invention has a mass reduction rate of a glass classified into a particle size of from 300 µm to 500 µm and having a mass corresponding to its specific gravity of preferably 50% or less, 49% or less, 48% or less, or 47% or less, particularly preferably 45% or less when the glass is immersed in 100 ml of an aqueous solution of HCl having a concentration of 10 vol% at 80°C for 90 hours. When the mass reduction rate is too high, it becomes difficult to use the composition for a glass fiber of the present invention in applications for which acid resistance is required.

The composition for a glass fiber of the present invention has a mass reduction rate of a glass classified into a particle size of from 300 µm to 500 µm and having a mass corresponding to its specific gravity of preferably 5% or less, 4.8% or less, 4.6% or less, 4.4% or less, 4.2% or less, 4% or less, 3.8% or less, 3.6% or less, 3.4% or less, or 3.2% or less, particularly preferably 3% or less when the glass is immersed in 100 ml of an aqueous solution of NaOH having a concentration of 10 mass% at 80°C for 90 hours. When the mass reduction rate is too high, it becomes difficult to use the composition for a glass fiber of the present invention in applications for which alkali resistance is required.

The glass composition for a glass fiber of the present invention has a total elusion amount in terms of oxide of a Li ion, a Na ion, and a K ion eluted from a glass classified into a particle size of from 300 µm to 500 µm and having a mass corresponding to its specific gravity of preferably 0.03 mg or less, 0.029 mg or less, 0.028 mg or less, 0.027 mg or less, 0.026 mg or less, 0.025 mg or less, 0.024 mg or less, 0.023 mg or less, 0.022 mg or less, or 0.021 mg or less, particularly preferably 0.020 mg or less when the glass is immersed in 100 ml of boiling ion-exchanged water for 1 hour. When the elusion amount is large, adhesion between the glass fiber and a sizing agent becomes difficult, and hence it becomes difficult to sufficiently form a coating film derived from the sizing agent on a surface of the glass fiber. As a result, when the glass fiber is kneaded with the resin, adhesive strength between the glass fiber and the resin may be reduced.

Methods of producing the composition for a glass fiber and glass fiber of the present invention are described below. In the following description, the method is described by taking a direct melting method (DM method) and an indirect forming method (marble melting method: MM method) as examples, but is not limited to the following, and another method may be adopted.

First, a raw material batch is blended so as to achieve the above-mentioned glass composition. Cullet may be used as part or the whole of glass raw materials. The reason why the contents of the respective components are limited is as described above, and the description thereof is omitted here.

Next, the raw material batch having been blended is loaded into a melting furnace to be melted and homogenized. A melting temperature is suitably from about 1,400°C to about 1,600°C. The raw material batch is dissolved by heating with the burner or the electrode arranged in the melting furnace. As described above, in the glass composition of the present invention, a foam layer is less liable to be formed on the glass melt at the time of melting, and hence the radiative heat from the burner is less liable to be blocked. In addition, the value of the ratio "Fe²⁺/total Fe" is large, and hence a thermal conductivity is excellent, and heat from the electrode is easily transferred into molten glass. Accordingly, when any one of the burner and the electrode is used as a heat source, the melting efficiency is excellent. The burner and the electrode may be used in combination as the heat source.

Subsequently, the resultant molten glass is continuously drawn from a bushing to be formed into a fiber form, to thereby provide a glass fiber (DM method). Alternatively, molten glass, which is obtained by forming the resultant molten glass into a marble form once, followed by re-melting, is continuously drawn from a bushing to be formed into a fiber form, to thereby provide a glass fiber (MM method).

A sizing agent that imparts desired performance may be applied to the surface of the glass fiber as required. Examples of the sizing agent include sizing agents obtained by mixing one or two or more kinds of a polyurethane resin, an epoxy resin, an acid copolymer, a modified polypropylene resin, a polyester resin, an antistatic agent, a surfactant, an antioxidant, a coupling agent, or a lubricant.

Examples of the coupling agent that may be used for the surface treatment of the glass fiber include γ-aminopropyltriethoxysilane, N-phenyl-γ-aminopropyltrimethoxysilane, γ-glycidoxypropyltrimethoxysilane, γ-methacryloxypropyltrimethoxysilane, γ-(2-aminoethyl)aminopropyltrimethoxysilane, β-(3,4-epoxycyclohexyl)ethyltrimethoxysilane, N-β-(N-vinylbenzylaminoethyl)-γ-aminopropyltrimethoxysilane hydrochloride, γ-chloropropyltrimethoxysilane, γ-mercaptopropyltrimethoxysilane, and vinyltriethoxysilane. It is preferred that those coupling agents be appropriately selected in accordance with the kind of the resin with which the glass fiber is composited.

The glass fiber of the present invention is suitably used as a chopped strand for reinforcing the resin. Other than the foregoing, the glass fiber of the present invention may be processed into any glass fiber product, such as a glass cloth, a glass filler, glass paper, a non-woven fabric, a continuous strand mat, a glass roving, or a milled fiber.

The glass fiber of the present invention may be used by being mixed with any other fiber as long as the object of the present invention is not inhibited. Examples of such fiber include glass fibers such as an S glass fiber, and fibers other than the glass fibers, such as a carbon fiber and a metal fiber.

### Examples

The present invention is described below by way of Examples. However, the present invention is not limited to Examples described below.

Examples 1 to 17 and Comparative Example 1 are shown in Tables 1 to 4.

**Table 1**

| | Unit | Example 1 | Example 2 | Example 3 | Example 4 | Example 5 |
|---|---|---|---|---|---|---|
| SiO₂ | | 54.3 | 54.1 | 53.8 | 57.0 | 58.0 |
| Al₂O₃ | | 13.5 | 13.7 | 14.0 | 12.7 | 13.3 |
| B₂O₃ | | 5.3 | 6.8 | 5.6 | 3.1 | 1.5 |
| MgO | | 2.1 | 0.6 | 2.4 22.2 | 2.1 | 2.5 |
| CaO | | 23.2 | 22.6 | | 24.4 | 23.0 |
| SrO | | 0.015 | 0.220 | 0.150 | 0.010 | 0.050 |
| BaO | | 0.009 | 0.010 | 0.020 | 0.010 | 0.010 |
| MgO+CaO | | 25.3 | 23.2 | 24.6 | 26.5 | 25.5 |
| Li₂O | mass% | 0.05 | 0.06 | 0.01 | 0.04 | 0.02 |
| Na₂O | | 0.64 | 0.35 | 0.48 | 0.04 | 0.59 |
| K₂O | | 0.082 | 0.200 | 0.200 | 0.090 | 0.380 |
| Li₂O+Na₂O+K₂O | | 0.772 | 0.610 | 0.690 | 0.170 | 0.990 |
| TiO₂ | | 0.40 | 0.29 | 0.25 | 0.15 | 0.11 |
| Fe₂O₃ | | 0.26 | 0.298 | 0.266 | 0.22 | 0.34 |
| Cl | | 0.002 | 0.0046 | 0.0051 | 0.006 | 0.002 |
| F | | 0.03 | 0.63 | 0.38 | 0.18 | 0.03 |
| P₂O₅ | | 0.062 | 0.031 | 0.04 | 0.016 | 0.032 |
| ZrO₂ | | 0.022 | 0.019 | 0.021 | 0.01 | 0.01 |
| Cr₂O₃ | | 0.004 | 0.011 | 0.006 | 0.004 | 0.004 |
| MoO₃ | ppm | 10 | 10 | 9 | 5 | 8 |
| SO₃ | | 20 | 30 | 140 | 130 | 160 |
| COD (concentration in batch) | ppm | 760 | 940 | 935 | 845 | 820 |
| SO₃ (concentration in batch) | | 220 | 300 | 500 | 550 | 500 |
| NO₃ (concentration in batch) | | 0 | 6,000 | 5,500 | 6, 600 | 6, 000 |
| Fe²⁺/total Fe | - | 79% | 62% | 68% | 51% | 55% |
| (R₂O+R'O+B₂O₃ )/(SiO₂+Al₂O₃) | - | 0.46 | 0.45 | 0.46 | 0.43 | 0.39 |
| Presence or absence of formation of foam layer on melt | | Absent | Absent | Absent | Absent | Absent |
| 10⁴ | °C | 1,069 | Unmeasured | Unmeasured | 1,094 | 1, 116 |
| 10³ (spinning temperature) | | 1,183 | Unmeasured | Unmeasured | 1,207 | 1,236 |
| 10^{2.5} | | 1,260 | Unmeasured | Unmeasured | 1,285 | 1,316 |
| 10^{2.0} | | 1,357 | Unmeasured | Unmeasured | 1,383 | 1,421 |
| Liquidus temperature T_{L} | | 1,073 | Unmeasured | Unmeasured | 1,104 | 1,134 |
| ΔT (10³-T_{L}) | | 110 | Unmeasured | Unmeasured | 103 | 102 |
| Dielectric constant (at 1 MHz, 25°C) | - | 7.0 | Unmeasured | Unmeasured | 7.0 | 7.1 |
| Dielectric loss tangent (at 1 MHz, 25°C) | - | 0.0014 | Unmeasured | Unmeasured | 0.0006 | 0.0013 |
| Young's modulus | GPa | 88 | Unmeasured | Unmeasured | 90 | 90 |
| Acid resistance | % | 42 | Unmeasured | Unmeasured | 4.5 | 1.9 |
| Alkali resistance | | 2.6 | Unmeasured | Unmeasured | Unmeasured | 2.9 |
| Water resistance | mg | 0.016 | Unmeasured | Unmeasured | 0.007 | 0.014 |

**Table 2**

| | Unit | Example 6 | Example 7 | Example 8 | Example 9 |
|---|---|---|---|---|---|
| SiO₂ | | | 58.9 | 54.6 | 54.0 |
| Al₂O₃ | | 60.8 13.2 | 14.3 | 14.1 | 14.1 |
| B₂O₃ | | 0.0 | 0.2 | 5.7 | 6.2 |
| MgO | | 4.4 | 0.9 | 0.5 | 1.1 |
| CaO | | 20.4 | 23.7 | 23.1 | 22.4 |
| SrO | | 0.020 | 0.030 | 0.180 | 0.130 |
| BaO | | 0.010 | 0.020 | 0.080 | 0.050 |
| MgO+CaO | | 24.8 | 24.6 | 23.6 | 23.5 |
| Li₂O | | 0.006 | 0.06 | 0.06 | 0.05 |
| Na₂O | mass% | 0.07 | 0.3 | 0.49 | 0.43 |
| K₂O | | 0.100 | 0.360 | 0.100 | 0.110 |
| Li₂O+Na₂O+K₂O | | 0.176 | 0.720 | 0.650 | 0.590 |
| TiO₂ | | 0.52 | 0.32 | 0.47 | 0.37 |
| Fe₂O₃ | | 0.3 | 0.393 | 0.176 | 0.247 |
| Cl | | 0.005 | 0.0024 | 0.0005 | 0.0045 |
| F | | 0 | 0.45 | 0.47 | 0.74 |
| P₂O₅ | | 0.04 | 0.036 | 0.088 | 0.081 |
| ZrO₂ | | 0.01 | 0.025 | 0.028 | 0.023 |
| Cr₂O₃ | | 0.014 | 0.008 | 0.054 | 0.006 |
| MoO₃ | ppm | 11 | 9 | 11 | 1 |
| SO₃ | | 50 | 40 | 230 | 340 |
| COD (concentration in batch) | ppm | 780 | 825 | 935 | 945 |
| SO₃ (concentration in batch) | | 250 | 300 | Unmeasured | Unmeasured |
| NO₃ (concentration in batch) | | 4,000 | 2,000 | Unmeasured | Unmeasured |
| Fe²⁺/total Fe | % | 51% | 60% | 58% | 65% |
| (R₂O+R'O+B₂O₃)/(SiO₂+Al₂₀₃) | - | 0.34 | 0.35 | 0.44 | 0.45 |
| Presence or absence of formation of foam layer on melt | - | Absent | Absent | Absent | Absent |
| 10⁴ | °C | 1,157 | Unmeasured | Unmeasured | Unmeasured |
| 10³ (spinning temperature) | | 1,280 | Unmeasured | Unmeasured | Unmeasured |
| 10^{2.5} | | 1,366 | Unmeasured | Unmeasured | Unmeasured |
| 10^{2.0} | | 1,474 | Unmeasured | Unmeasured | Unmeasured |
| Liquidus temperature T_{L} | | 1,197 | Unmeasured | Unmeasured | Unmeasured |
| ΔT (10³-T_{L}) | | 83 | Unmeasured | Unmeasured | Unmeasured |
| Dielectric constant (at 1 MHz, 25°C) | - | 6.8 | Unmeasured | Unmeasured | Unmeasured |
| Dielectric loss tangent (at 1 MHz, 25°C) | - | 0.0014 | Unmeasured | Unmeasured | Unmeasured |
| Young's modulus | GPa | 89 | Unmeasured | Unmeasured | Unmeasured |
| Acid resistance | % | 0.8 | Unmeasured | I Unmeasured | Unmeasured |
| Alkali resistance | | Unmeasu red | Unmeasured | Unmeasured | Unmeasured |
| Water resistance | mg | 0.005 | Unmeasured | Unmeasured | Unmeasured |

**Table 3**

| | Unit | Example 1 | Example 10 | Example 11 | Example 12 | Example 13 | Comparative Example 1 |
|---|---|---|---|---|---|---|---|
| SiO₂ | | 54.3 | 54.8 | 54.6 | 54.7 | 54.7 | 54.1 |
| Al₂O₃ | | 13.5 | 13.5 | 13.5 | 13.6 | 13.5 | 13.5 |
| B₂O₃ | | 5.3 | 5.1 | 5.2 | 5.1 | 5.1 | 5.3 |
| MgO | | 2.1 | 2.1 | 2.1 | 2.1 | 2.1 | 2.2 |
| CaO | | 23.2 | 22.9 | 23.0 | 23.0 | 23.0 | 23.3 |
| SrO | | 0.015 | 0.015 | 0.022 | 0.015 | 0.022 | 0.015 |
| BaO | | 0.009 | 0.008 | 0.007 | 0.008 | 0.006 | 0.008 |
| MgO+CaO | | 25.3 | 25.0 | 25.1 | 25.1 | 25.1 | 25.5 |
| Li₂O | | 0.05 | 0.06 | 0.05 | 0.06 | 0.04 | 0.06 |
| Na₂O | | 0.64 | 0.66 | 0.64 | 0.59 | 0.65 | 0.64 |
| K₂O | | 0.082 | 0.082 | 0.068 | 0.120 | 0.070 | 0.085 |
| Li₂O+Na₂O+K₂O | | 0.772 | 0.802 | 0.758 | 0.770 | 0.760 | 0.785 |
| TiO₂ | mass% | 0.40 | 0.40 | 0.42 | 0.32 | 0.42 | 0.40 |
| Fe₂O₃ | | 0.26 | 0.26 | 0.26 | 0.22 | 0.26 | 0.26 |
| Cl | | 0.002 | 0.002 | 0.003 | 0.001 | 0.004 | 0.005 |
| F | | 0.03 | 0.03 | 0.02 | 0.03 | 0.03 | 0.04 |
| P₂O₅ | | 0.062 | 0.062 | 0.065 | 0.062 | 0.065 | 0.062 |
| ZrO₂ | | 0.022 | 0.022 | 0.026 | 0.024 | 0.026 | 0.022 |
| Cr₂O₃ | | 0.004 | 0.004 | 0.004 | 0.003 | 0.004 | 0.004 |
| MoO₃ | ppm | 10 | 8 | 7 | 4 | 5 | 2 |
| SO₃ | | 20 | 30 | 30 | 140 | 440 | 1,100 |
| COD (concentration in batch) | ppm | 760 | 760 | Unmeasured | 560 | 770 | 760 |
| SO₃ (concentration in batch) | | 220 | 220 | Unmeasured | 640 | 2,400 | 4, 600 |
| NO₃ (concentration in batch) | | 0 | 3, 300 | Unmeasured | 0 | 0 | 0 |
| Fe²⁺/total Fe | % | 79% | 57% | 56% | 49% | 43% | 28% |
| Presence or absence of formation of foam layer on melt | - | Absent | Absent | Absent | Absent | Absent | Present |

**Table 4**

| | Unit | Example 14 | Example 15 | Example 16 | Example 17 |
|---|---|---|---|---|---|
| SiO₂ | | 59.6 | 59.7 | 59.9 | 59.9 |
| Al₂O₃ | | 14.2 | 13.2 | 13.1 | 12.8 |
| B₂O₃ | | 0.0 | 0.0 | 0.0 | 0.0 |
| MgO | | 0.9 | 2.7 | 2.7 | 2.6 |
| CaO | | 23.1 | 23.0 | 22.8 | 23.0 |
| SrO | | 0.026 | 0.044 | 0.014 | 0.023 |
| BaO | | 0.023 | 0.081 | 0.011 | 0.023 |
| MgO+CaO | | 24.0 | 25.7 | 25.5 | 25.6 |
| Li₂O | | 0.04 | 0.0038 | 0.019 | 0.02 |
| Na₂O | mass% | 0.29 | 0.36 | 0.36 | 0.46 |
| K₂O | | 0.440 | 0.087 | 0.420 | 0.280 |
| Li₂O+Na₂O+K₂O | | 0.770 | 0.451 | 0.799 | 0.760 |
| TiO₂ | | 0.34 | 0.37 | 0.33 | 0.32 |
| Fe₂O₃ | | 0.46 | 0.27 | 0.35 | 0.31 |
| Cl | | 0.003 | 0.005 | 0.004 | 0.005 |
| F | | 0.43 | 0.05 | 0.03 | 0.03 |
| P₂O₅ | | 0.035 | 0.071 | 0.023 | 0.055 |
| ZrO₂ | | 0.028 | 0.038 | 0.028 | 0.022 |
| Cr₂O₃ | | 0.007 | 0.003 | 0.006 | 0.005 |
| MoO₃ | ppm | 11 | 61 | 8 | 7 |
| SO₃ | | 30 | 130 | 20 | 20 |
| COD (concentration in batch) | ppm | 810 | 780 | 780 | 510 |
| SO₃ (concentration in batch) | | 217 | 2, 600 | 220 | Unmeasured |
| NO₃ (concentration in batch) | | Unmeasured | Unmeasured | 0 | Unmeasured |
| Fe²⁺/total Fe | % | 90% | 41% | 79% | 86% |
| (R₂O+R'O+B₂O₃) / (SiO₂+Al₂O₃) | - | 0.34 | 0.36 | 0.36 | 0.36 |
| Presence or absence of formation of foam layer on melt | - | Absent | Absent | Absent | Absent |
| 10⁴ | °C | 1,150 | 1,141 | 1,143 | 1,140 |
| 10³ (spinning temperature) | | 1,279 | 1,262 | 1,265 | 1,262 |
| 10^{2.5} | | 1,365 | 1,344 | 1,347 | 1,344 |
| 10^{2.0} | | 1,475 | 1,447 | 1,449 | 1,446 |
| Liquidus temperature T_{L} | | 1,154 | 1,149 | 1,160 | 1,161 |
| ΔT (10³-T_{L}) | | 125 | 113 | 105 | 101 |
| Dielectric constant (at 1 MHz, 25°C) | - | 6.9 | 7.0 | 7.0 | 7.0 |
| Dielectric loss tangent (at 1 MHz, 25°C) | - | 0.0015 | 0.0015 | 0.0016 | 0.0016 |
| Young's modulus | GPa | 86 | 89 | 88 | 87 |
| Acid resistance | % | 0.8 | 0.8 | 0.7 | 0.7 |
| Alkali resistance | | 2.4 | 2.6 | 1.9 | 1.9 |
| Water resistance | mg | 0.004 | 0.008 | 0.005 | 0.005 |

First, a plurality of various glass raw materials, such as a natural raw material and a chemical raw material, were weighed in such predetermined amounts as to achieve a total amount of 500 g, and were prepared so that glass composition obtained after melting became the glass composition shown in each of Tables 1, 2, and 4. Next, the resultant raw material batch was loaded into a 300 cc platinum-rhodium crucible, and was then heated at from about 1,450°C to about 1,550°C for 5 hours in an air atmosphere in an indirect-heating electric furnace to provide molten glass. In order to bring the molten glass into a homogeneous state, the molten glass was stirred with a heat-resistant stirring rod 1 hour after the entire batch was loaded into the crucible and 2 hours before the resultant was poured out. The molten glass thus brought into a homogeneous state was poured out onto a carbon sheet to provide an ingot-shaped sample measuring 160 mm×60 mm×10 mm. The resultant sample was immediately transferred to an annealer to be subjected to annealing. The annealing was performed as follows: the sample was left to stand still at 720°C for 30 minutes, then cooled to 400°C at a cooling rate of -3°C/min, and then cooled to room temperature at a cooling rate of -10°C/min.

Examples 10 to 13 and Comparative Example 1 are examples changed in redox state of the glass by blending raw materials having different chemical oxygen demand (COD) values or nitrate raw materials, or adjusting the content of SO₃ in the glass composition of Example 1.

The resultant samples were each measured for the following characteristics.

A temperature at a viscosity at high temperature of 10⁴ dPa·s, a temperature at a viscosity at high temperature of 10³ dPa·s, a temperature at a viscosity at high temperature of 10^{2.5} dPa·s, and a temperature at a viscosity at high temperature of 10² dPa·s (represented as "10⁴", "10³", "10^{2.5}", and "10²", respectively in each of the tables) were each measured as follows: part of a glass sample obtained by the above-mentioned method was crushed in advance so as to achieve a proper size; the resultant was loaded into a platinum crucible to be reheated to a melt state; and then the measurement was performed by a platinum sphere pull up method. A spinning temperature is a temperature corresponding to a viscosity of 10³ dPa·s.

A liquidus temperature T_{L} was measured as described below. A glass sample obtained by the above-mentioned method was pulverized, and glass powder that had passed through a sieve having an opening of 500 µm and deposited on a sieve having an opening of 300 µm was collected by a mass corresponding to 10 times as large as its density. The collected glass powder was loaded into a platinum boat having a size of about 120 mm×about 20 mm×about 10 mm, and the platinum boat was loaded into an electric furnace having a linear temperature gradient for 24 hours. After that, the glass was taken out of the platinum boat and cooled to room temperature, and was then identified for a crystal precipitation site through observation with a microscope. A temperature corresponding to the crystal precipitation site was calculated from a temperature gradient graph of the electric furnace, and the temperature was adopted as a liquidus temperature.

A dielectric constant ε and a dielectric loss tangent tanδ at a frequency of 1 MHz were each measured with a sheet-shaped sample obtained by processing the glass sample obtained by the above-mentioned method into dimensions of 50 mm×50 mm×2 mmt. Both the main surfaces of the sample were lap finished with a polishing liquid containing #1200 alumina powder. The measurement was performed with a resonator for 1 MHz and an impedance analyzer under a room temperature environment.

The measurement of a Young's modulus was performed with a sample piece obtained by processing the glass obtained by the above-mentioned method into a sheet shape measuring 40 mm×20 mm×2 mm. Both the main surfaces of the sample piece were polished with a polishing liquid containing #1200 alumina powder. The sample piece was subjected to fine annealing before the measurement so that a strain was removed therefrom. In the measurement, a sample piece having formed thereon a gold thin film having a thickness of 1,500 Å or more by deposition was used. The measurement was performed with a free resonance elastic modulus measurement device (JE-RT3 manufactured by Nihon Techno-Plus Co. Ltd.).

The acid resistance was measured as described below. First, the glass sample obtained above was pulverized to provide glass powder having a particle size of from 300 µm to 500 µm. A mass (m1) of the glass powder corresponding to its specific gravity was accurately weighed and loaded into a resin-made vessel. Subsequently, 100 ml of a 10 vol% hydrochloric acid solution obtained by diluting hydrochloric acid having a concentration of 35 mass% with ion-exchanged water was loaded into the vessel, and shaken together with the vessel in a water bath at 80°C for 90 hours. A shaking rate was set to 50 rpm. After that, the vessel was taken out and cooled with water for 30 minutes. The glass powder in the vessel was taken out into a glass filter (manufactured by SHIBATA, pore size: 10 µm to 16 µm) while being filtered with a suction filtration device. A mass (m2) of a glass-made funnel used here was measured in advance. The vessel was washed with ion-exchanged water so that no glass powder remained therein. After that, the funnel containing the glass powder was left to stand still in a dryer at 120°C, and retained until the powder was dried. After that, the funnel containing the glass powder was transferred to a desiccator and cooled to room temperature. After it was recognized that the temperature of the funnel returned to room temperature, a total content (m3) of the glass powder and the funnel was measured. A mass reduction rate of the glass sample was calculated by using the equation "mass reduction rate (%) of glass={m1-(m3-m2)}÷m1×100".

The alkali resistance was measured as described below. First, the glass sample obtained above was pulverized to provide glass powder having a particle size of from 300 µm to 500 µm. A mass (m1) of the glass powder corresponding to its specific gravity was accurately weighed and loaded into a resin-made vessel. Subsequently, 100 ml of an aqueous solution of sodium hydroxide having a concentration of 10 mass% adjusted with a sodium hydroxide reagent and ion-exchanged water was loaded into the vessel, and shaken together with the vessel in a water bath at 80°C for 90 hours. A shaking rate was set to 50 rpm. After that, the vessel was taken out and cooled with water for 30 minutes. The glass powder in the vessel was taken out into a glass filter (manufactured by SHIBATA, pore size: 10 µm to 16 µm) while being filtered with a suction filtration device. A mass (m2) of a glass-made funnel used here was measured in advance. The vessel was washed with ion-exchanged water so that no glass powder remained therein. After that, the funnel containing the glass powder was left to stand still in a dryer at 120°C, and retained until the powder was dried. After that, the funnel containing the glass powder was transferred to a desiccator and cooled to room temperature. After it was recognized that the temperature of the funnel returned to room temperature, a total content (m3) of the glass powder and the funnel was measured. A mass reduction rate of the glass sample was calculated by using the equation "mass reduction rate (%) of glass={m1-(m3-m2)}÷m1×100".

The water resistance was measured as described below. First, the glass sample obtained above was pulverized to provide glass powder having a particle size of from 300 µm to 500 µm. A mass of the glass powder corresponding to its specific gravity was accurately weighed and loaded into a quartz-made flask. Subsequently, 100 ml of ion-exchanged water was loaded into the flask, and was subjected to heat treatment in a boiling water bath for 1 hour. After that, the resultant was cooled with water together with the flask. After it was recognized that the content of the flask was cooled to room temperature, a liquid in the flask was collected. The concentrations of a Li ion, a Na ion, and a K ion in the liquid were analyzed by atomic absorption spectroscopy, and the amounts eluted from the glass sample were calculated in terms of oxides.

The presence or absence of the formation of a foam layer on a surface of a glass melt was recognized as described below. First, a plurality of various glass raw materials, such as a natural raw material and a chemical raw material, were weighed in such predetermined amount as to achieve a total amount of 100 g, and were prepared so that glass composition obtained after melting became the glass composition shown in Table 2. The resultant raw materials were loaded into a resin-made vessel having a capacity of 1.1 liters and mixed with a tumbler mixer for 15 minutes to provide a raw material batch. Next, the resultant raw material batch was loaded into a triangular crucible made of a platinum-gold alloy, followed by melting in an air atmosphere in an indirect-heating electric furnace. Temperature conditions were set as follows: the raw material batch was left to stand still at 1,250°C for 40 minutes, then increased in temperature to 1,500°C in 40 minutes, and left to stand still at 1,500°C for 40 minutes. After the melting was completed, the triangular crucible containing the glass melt was taken out from the electric furnace to be left to cool. Thus, the glass melt was solidified. The bottom surface and side surface of the triangular crucible were immersed in a bucket containing water while attention was paid so that no water entered the crucible. The glass was taken out through utilization of a difference in coefficient of thermal expansion between the crucible and the glass. The glass having been taken out was immediately transferred into an annealer having been heated to 720°C in advance, and was subjected to annealing. The annealing was performed as follows: the glass was left to stand still at 720°C for 30 minutes, then cooled to 400°C at a cooling rate of -3°C/min, and then cooled to room temperature at a cooling rate of -10°C/min. The glass sample cooled to room temperature was observed from above, and the presence or absence of the formation of a foam layer on a surface of the sample was recognized.

Values of the COD and the ratio "Fe²⁺/total Fe" in the raw material were measured by chemical analysis. The COD was analyzed in conformity with JIS K 0102 Testing methods for industrial water and industrial wastewater, 20. Oxygen demand by potassium dichromate (COD Cr).

The ratio "Fe²⁺/total Fe" in the glass was measured as described below. First, the analysis of the amount of Fe²⁺ was performed as described below. The glass sample obtained by the above-mentioned method was pulverized to provide glass powder, and then 0.5 g of the glass powder was weighed and loaded into a Teflon-made vessel, followed by wetting with deoxygenated water. Next, while a nitrogen gas was introduced through a tube, 15 ml of (1+1) sulfuric acid was added, followed by the addition of deoxygenated water to provide a 50 ml aqueous solution. Next, while a nitrogen gas was flowed, the resultant was heated together with the Teflon-made vessel in a water bath at 100°C for 10 minutes. Next, the nitrogen gas introduction tube was removed, and 7 ml of hydrofluoric acid was added. While a nitrogen gas was flowed again through a tube, the resultant was stirred every 10 minutes and heated for 30 minutes. The nitrogen gas introduction tube was removed again and 6 g of boric acid was added. While a nitrogen gas was flowed again, the resultant was heated for 10 minutes. After that, while a nitrogen gas was flowed, the Teflon-made vessel was cooled in water. The tube was removed, followed by the addition of deoxygenated water to set the total amount to 150 ml. 0.5 Milliliter of an O-phenanthroline indicator was added, and titration was performed with a N/200 aqueous solution of cerium sulfate. A point at which the liquid was turned from red to pale blue was read.

The analysis of the total amount of Fe was performed as described below. The glass sample was pulverized to provide glass powder, and then 0.3 g of the glass powder was weighed on a dish made of a platinum-rhodium alloy, followed by wetting with pure water. 3 Milliliters of SSG (1+1) sulfuric acid, 1 ml of SSG nitric acid, and 20 ml of hydrofluoric acid were added, and the mixture was heated with an electric heater. Thus, the glass powder was decomposed and brought to dryness. Next, 12.5 ml of a mixed aqueous solution of pure water and SSG hydrochloric acid was added to the resultant solid matter, and the solid matter was dissolved by heating with the electric heater, and then left to cool. The solid matter was filtered with 5C filter paper, and the volume was adjusted to be fixed in a 250 ml volumetric flask. The concentration of Fe in the sample solution was measured with an apparatus for inductively coupled plasma atomic emission spectroscopy (ICP-AES). The concentrations of comparative standard solutions are 0 (µg/ml), 0.5 (µg/ml), 1.0 (µg/ml), 2.0 (µg/ml), and 5.0 (µg/ml). A measurement wavelength was set to Fe: 238.277 nm. (1+1) means a solution obtained by diluting an undiluted solution of each of various acid solutions with water at a ratio of 1:1. SSG means a super special grade reagent. The value of the ratio "Fe²⁺/total Fe" was calculated by using the amount of Fe²⁺ and the total amount of Fe measured as described above.

As shown in Tables 1 to 4, in Examples 1 to 17, no foam layer is formed on the glass melt, and hence radiative heat from an upper burner is easily transferred. In addition, the value of the ratio "Fe²⁺/total Fe" is 40% or more, and hence a heat conductivity from an electrode is high. Accordingly, production with low energy can be achieved. In addition, the value of the ratio "Fe²⁺/total Fe" is 40% or more, and hence heat radiation from the glass melt easily occurs at the time of spinning, and a fiber shape is stabilized. Accordingly, a high-quality fiber can be produced. Meanwhile, in Comparative Example 1, a foam layer is formed on the glass melt, and hence the radiative heat from the upper burner is hardly transferred. In addition, the value of the ratio "Fe²⁺/total Fe" is less than 40%, and hence the heat conductivity from the electrode is poor. Accordingly, it is conceived that energy efficiency at the time of production is poor. In addition, because the value of the ratio "Fe²⁺/total Fe" is less than 40%, heat radiation from the glass melt hardly occurs at the time of spinning, and the fiber shape is not stabilized. Accordingly, it is conceived that the production of a high-quality fiber is difficult.

## Claims

1. A composition for a glass fiber, comprising SiO₂ as a main component, comprising, in terms of mass%, 0% to less than 10% of B₂O₃, 20% to 30% of MgO+CaO, and 600 ppm or less of SO₃, and having a ratio "Fe²⁺/total Fe" in glass of 40% or more.

2. The composition for a glass fiber according to claim 1, comprising, in terms of mass%, 50% to 65% of SiO₂, 10% to 20% of Al₂O₃, 0% to less than 10% of B₂O₃, 20% to 30% of MgO+CaO, 0.5% or less of SrO+BaO, 1 ppm to 200 ppm of SO₃, 0.8% or less of F, and less than 0.1% of P₂O₅, and having a ratio "Fe²⁺/total Fe" in glass of 40% or more.

3. The composition for a glass fiber according to claim 1 or 2, comprising, in terms of mass%, 1% or less of TiO₂, 2% or less of Li₂O+Na₂O+K₂O, and 0 ppm to 30 ppm of MoO₃.

4. A glass fiber, comprising the composition for a glass fiber of claim 1 or 2.

5. A method of producing the glass fiber of claim 4, comprising:
heating and melting glass raw materials blended so as to have a predetermined composition in a melting furnace to provide a molten glass; and
ejecting the molten glass from a plurality of bushing nozzles to form the molten glass into a fiber form.

6. The method of producing the glass fiber according to claim 5, comprising heating the glass raw materials and/or the molten glass with a burner arranged in the melting furnace.

7. The method of producing the glass fiber according to claim 5, comprising heating the glass raw materials and/or the molten glass with an electrode arranged in the melting furnace.
